# EUROPÄISCHE PATENTSCHRIFT

(11) **EP 0 587 015 B1**
(45) Veröffentlichungstag und Bekanntmachung des Hinweises auf die Patenterteilung: **14.01.1998**
(21) Anmeldenummer: 93113878.8
(22) Anmeldetag: 31.08.1993
(51) Int. Cl.: B61B 13/12, B65G 19/02

(54) **Förderanlage**
Conveyor device
Dispositif de transport

(30) Priorität: 07.09.1992 CH 2791/92
(43) Veröffentlichungstag der Anmeldung: 16.03.1994
(73) Patentinhaber: Von Roll Holding AG, 4563 Gerlafingen (CH)
(72) Erfinder: Hulmann, Louis, CH-2873 Saulcy (CH); Jost, Albert, CH-2764 Courrendlin (CH); Baumgartner, Peter, CH-4742 Laufen (CH)
(74) Vertreter: Wagner, Wolfgang, Dr. Phil., Dipl.-Phys.

(56) Entgegenhaltungen:
- EP-A- 0 203 898
- CH-A- 669 167
- FR-A- 2 269 840
- US-A- 4 696 236

## Beschreibung

Die Erfindung betrifft eine Förderanlage gemäss dem Oberbegriff des Anspruchs 1. Eine derartige Förderanlage ist aus der US-A-4 696 236 bekannt.

Bei der bekannten gattungsgemässen Anlage ist das Hüllglied als Riemen ausgebildet und der Mitnehmer als Paar von Rädern, welche einander, wenn der Mitnhemer wirksam ist, blockieren. Die Ausbildung des Hüllglieds als Riemen zieht verhältnismässig hohe und schlecht beherrschbare Reibungskräfte zwischen demselben und der Gleitschiene, in welcher er geführt ist, nach sich. Insbesondere kann die Haftreibung bei Stillstand des Hüllglieds beträchtlich sein, so dass beim Wiederanfahren grosse Kräfte und ungleichmässige, ruckartige Bewegungen entstehen können. Diese Tendenz wird durch die Verwendung eines Mitnehmers mit kleiner Kontaktfläche verstärkt. Der Mitnehmer drückt nämlich, damit trotz der kleinen Fläche die erforderliche Reibung mit dem Riemen gewährleistet ist, zwangsläufig mit verhältnismässig grosser Kraft gegen denselben und drückt ihn dadurch entsprechend stark gegen die Gleitschiene. Zudem ist ein Riemen gewöhnlich mehr oder weniger elastisch, was den geschilderten Effekt verstärkt. Insbesondere bei schweren und womöglich rollbaren Lasten sind jedoch ruckartige Bewegungen gefährlich, da sie zu ungleichmässiger Belastung des Wagens führen können und schlimmstenfalls sogar dazu, dass die Last vom Wagen abrollt und ausser Kontrolle gerät. Ein weiterer mit der Elastizität des Riemens verbundener Nachteil ist der Umstand, dass dieselbe eine hochpräzise Steuerung des Wagens nicht zulässt. Falls der Wagen sehr genau plaziert werden muss, ist dies mindestens ohne beträchtlichen zusätzlichen Aufwand kaum zu erreichen.

Aus der CH-A-669 167 ist eine ähnliche Anlage bekannt, bei der zwar das Hüllglied als Kette ausgebildet ist, der Mitnehmer jedoch als an einem Ende des Wagens angebrachter runder Reibschuh, dessen Durchmesser nicht ganz die Breite der Kette erreicht und welcher daher den Kontakt mit dem Hüllglied noch stärker auf eine kleine Fläche konzentriert. Die Anlage bietet daher auch keine befriedigende Lösung der oben geschilderten Schwierigkeiten.

Der Erfindung liegt die Aufgabe zugrunde, eine gattungsgemässe Förderanlage anzugeben, welche auch grosse Lasten - in erster Linie ist hier an den Transport von Papierrollen in Druckereien gedacht, doch sind auch andere Anwendungen wie die Beförderung schwerer Teile in Montagehallen möglich - zielgenau und sicher transportieren kann.

Diese Aufgabe wird durch die Erfindung, wie sie in den Ansprüchen gekennzeichnet ist, gelöst.

Durch die erfindungsgemässe Ausbildung der gattungsgemässen Förderanlage ist die Reibung des Hüllglieds gegenüber der Gleitschiene geringer und besser beherrschbar und weniger von der Belastung abhängig. Die geringe Elastizität der Kette verringert die Störungsanfälligkeit und erlaubt eine genaue Steuerung der Wagenbewegungen. Durch die grössere zur Verfügung stehende Fläche des Mitnehmers kann ausreichende Reibung zwischen demselben und dem Hüllglied auch bei verhältnismässig geringem Anpressdruck erzielt werden. Vor allem starke Haftreibung und entsprechend ausgeprägte Rucke beim Anfahren und Anhalten treten nicht auf.

Im folgenden wird die Erfindung anhand von ein Ausführungsbeispiel darstellenden Figuren näher erläutert. Es zeigen
- Fig. 1: einen Querschnitt durch einen Kanal mit einer erfindungsgemässen Förderanlage mit Schienenanordnung und Wagen,

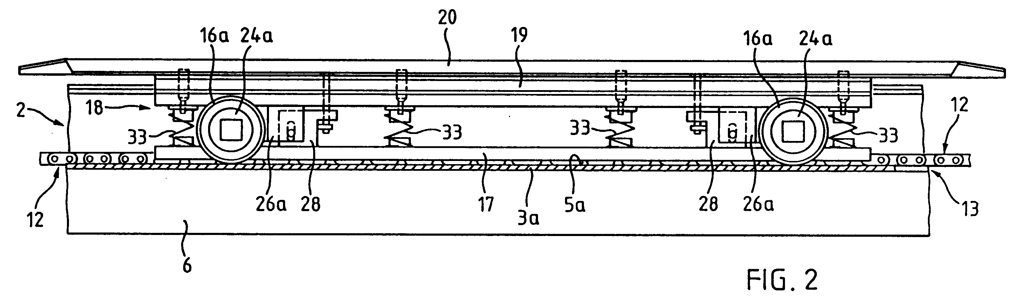

- Fig. 2: eine Seitenansicht des Wagens und der Schienenanordnung der Förderanlage nach Fig. 1, wobei seitliche Teile der Schienenanordnung weggeschnitten sind,
- Fig. 3: vergrössert einen Querschnitt durch die Schienenanlage sowie eine Frontansicht des Wagens der Förderanlage nach Fig. 1,
- Fig. 4a: vergrössert einen Ausschnitt aus der Seitenansicht des Wagens,
- Fig. 4b: einen Schnitt längs B - B in Fig. 4a,
- Fig. 5a: einen Teil der Antriebseinheit der Förderanlage nach Fig. 1,
- Fig. 5b: einen Schnitt längs B-B in Fig. 4a und
- Fig. 5c: einen Schnitt längs C-C in Fig. 4b.

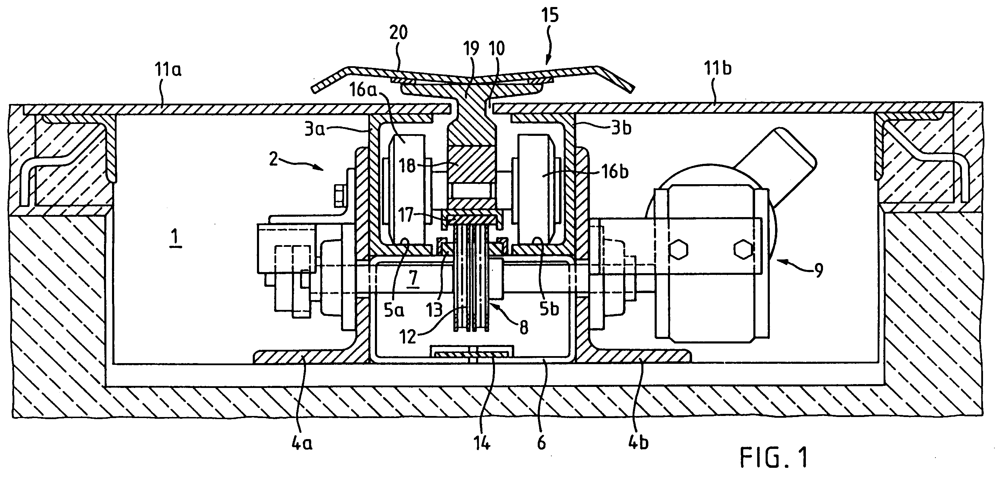

In einem Kanal 1 in einem etwa aus Beton bestehenden Boden ist eine Schienenanordnung 2 verlegt, die zwei einander gegenüberliegende C-Profile 3a,b umfasst, welche durch Winkeleisen 4a,b mit dem Boden des Kanals 1 verbunden sind. Die Innenseiten der unteren Stege der C-Profile 3a,b bilden parallele, seitlich mit Abstand nebeneinander angeordnete horizontale Laufflächen 5a,b. Unterhalb der C-Profile 3a,b ist ein Hohlprofil 6 angeordnet, welches am in Fig. 1 gezeigten Abschnitt der Schienenanordnung 2 unterbrochen ist, während die seitlich des Hohlprofils 6 liegenden Winkeleisen 4a,b von einer Achse 7 durchdrungen werden, an welcher ein Antriebsrad 8 befestigt ist. Die Achse 7 wird von einem Elektromotor 9 angetrieben. Der Kanal 1 ist bis auf einen mittig zwischen den C-Profilen 3a,b liegenden Spalt 10 von zwei Platten 11a,b zugedeckt.

Das Antriebsrad 8 ist als Kettenrad ausgebildet. Es trägt, zusammen mit einem nicht dargestellten in Laufrichtung vom Antriebsrad 8 beabstandeten und ihm entsprechenden Umlenkrad ein als geschlossene Kette, insbesondere Doppelkette 12 ausgebildetes Hüllglied, welches zwischen dem Antriebsrad 8 und dem Umlenkrad über eine gerade Gleitschiene 13 geführt ist, die annähernd vom oberen Rand des Antriebsrads 8 zum oberen Rand des Umlenkrades reicht und auf der die Doppelkette 12 gleitend aufliegt. Für den Fall, dass die im Hohlprofil 6 zurücklaufende Doppelkette 12 durchhängt, ist in demselben unten eine Gleitplatte 14 aus Kunststoff angebracht.

Die Doppelkette 12, das Antriebsrad 8, das Umlenkrad und die Gleitschiene 13, über welche die Doppelkette 12 geführt sind, bilden zusammen mit der Achse 7 und dem Elektromotor 9 eine Antriebseinheit für einen Wagen 15, welcher mit zwei Paaren von Laufrädern 16a,b auf den Laufflächen 5a,b läuft und mittels einer Mitnehmerleiste 17, welche mittig zwischen den Laufrädern 16a,b vertikal verschieblich am Wagen 15 aufgehängt ist und durch Federn gegen die Doppelkette 12 gedrückt wird, mit der Antriebseinheit in Kontakt ist. Die Mitnehmerleiste 17 besteht an der Unterseite aus einem guten Reibschluss mit der Doppelkette 12 sichernden und zugleich abriebfesten Belag, der aus Materialien bestehen kann, wie sie für Bremsbeläge verwendet werden. Sie sollte so lang sein, dass sie auch an Uebergangsstellen zwischen Antriebseinheiten satt auf der Doppelkette 12 aufliegt.

Ein Fahrgestell 18 des Wagens 15, an welchem die Laufräder 16a,b befestigt sind, trägt an der Oberseite einen durch den Spalt 10 ragenden Träger 19, auf welchem eine Mulde 20 zur Aufnahme zu transportierender Güter montiert ist. Beim dargestellten Wagen 15 ist die Mulde 20 für die Aufnahme einer Papierrolle gedacht und nach oben leicht konkav ausgebildet.

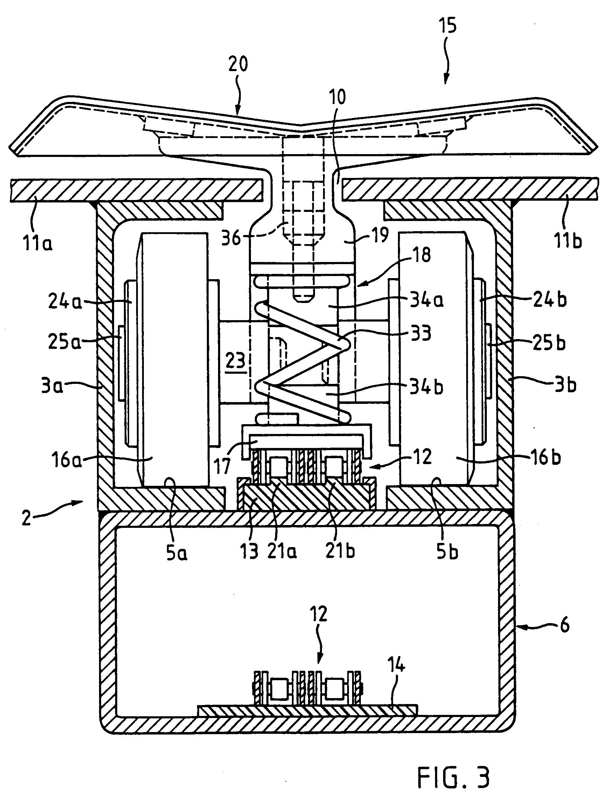

In Fig. 3 sind der Wagen 15 in Vorderansicht und die Schienenanordnung 2, an einer zwischen dem Antriebsrad 8 und dem Umlenkrad liegenden Stelle geschnitten, vergrössert und deutlicher dargestellt. Dort ist auch ersichtlich, dass die Gleitschiene 13 an der Oberseite zwei parallel nebeneinander verlaufende Führungsstege 21a,b aufweist, auf denen die Doppelkette 12 abrollt.

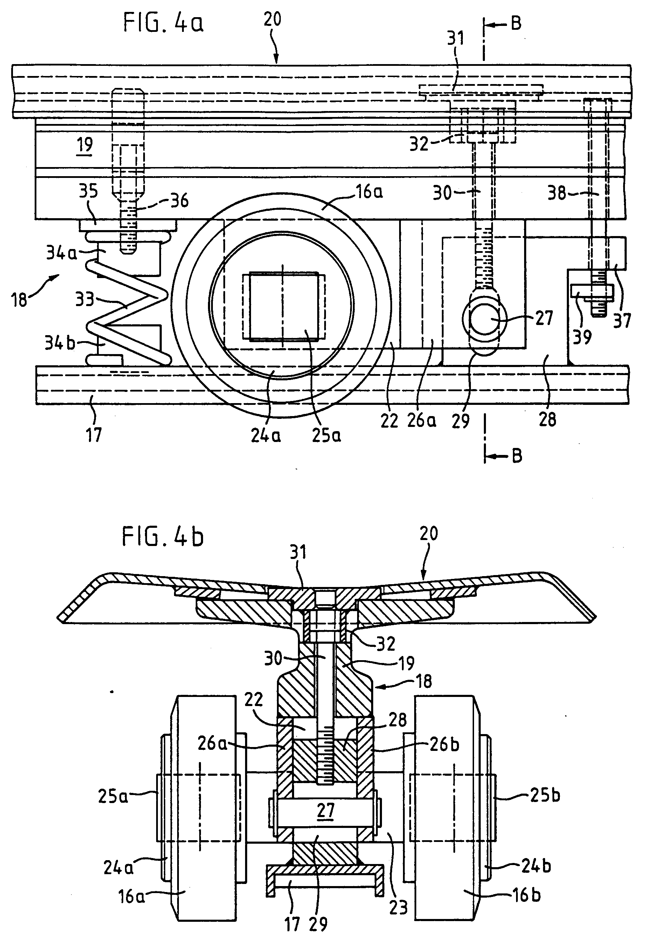

Aus Fig. 4a,b ist die Befestigung der Laufräder 16a,b sowie der Mitnehmerleiste 17 am Fahrgestell 18 am besten ersichtlich. An einem Achsträger 22 ist eine starre Achse 23 befestigt, welche Naben 24a,b trägt, an welchen die Laufräder 16a,b drehbar gelagert sind. In den Naben 24a,b sind zudem Führungsrollen 25a, 25b um vertikale Achsen drehbar gelagert, deren Umfangsflächen etwas aus der Nabe 24a bzw. 24b herausragen und bei Berührung des C-Profils 3a bzw. 3b auf demselben abrollen und eine direkte Berührung zwischen C-Profil und Nabe und ein Entlangschleifen der letzteren am C-Profil verhindern.

Anschliessend an den Achsträger 22 weist das Fahrgestell 18 jeweils zwei mit Abstand nebeneinander angeordnete Laschen 26a,b auf, welche durch einen Querbolzen 27 verbunden sind. Die Mitnehmerleiste 17 weist dagegen einen Haltefortsatz 28 auf, welcher zwischen den Laschen 26a,b liegt und mit einem vertikal gerichteten Langloch 29 versehen ist, durch welches der Querbolzen 27 ragt. Der Haltefortsatz 28 ist somit den Laschen 26a,b gegenüber vertikal begrenzt verschiebbar.

Der Haltefortsatz 28 trägt ausserdem in einer Gewindebohrung einen Einstellbolzen 30, welcher durch eine Bohrung im Fahrgestell 18 und Träger 19 geführt ist. Sein Sechskantkopf liegt in einer von der Oberfläche der Mulde 20 aus nach Entfernen eines Deckels 31 zugänglichen Vertiefung, in der er - durch einen zwischen seinem Kopf und dem Träger 19 wirksamen Anschlag nach unten begrenzt - verschieblich ist. Durch Verdrehen des Einstellbolzens 30 lässt sich die durch den besagten Anschlag bestimmte Maximalentfernung zwischen dem Fahrgestell 18 und dem Haltefortsatz 28 und damit der Mitnehmerleiste 17 einstellen. Bei aufgeschraubtem Deckel 31 kann der Einstellbolzen 30 nicht verdreht werden, da er durch ein vom Deckel nach unten ragendes Sechskantrohr 32 blockiert ist. Wird die Verschraubung des Deckels 31 jedoch gelöst, kann derselbe zur Betätigung des Einstellbolzens 30 mittels des Sechskantrohrs 32 verwendet werden.

Zwischen dem Fahrgestell 18 und der Mitnehmerleiste 17 sind mehrere Spiralfedern 33 wirksam, welche jeweils über einander gegenüberliegende Zapfen 34a,b gestülpt sind und die Mitnehmerleiste 17 nach unten drücken. Der obere Zapfen 34a weist einen Kragen 35 auf, an welchem die Spiralfeder 33 abgestützt ist. Er ist mit dem Fahrgestell 18 durch einen Befestigungsbolzen 36 verbunden, der in ein Gewinde im Zapfen 34a eingreift und mittels dessen sein Abstand vom Fahrgestell 18 verändert und so der Federdruck reguliert werden kann.

Im unbelasteten Zustand des Wagens 15 drücken die Spiralfedern 33 die Mitnehmerleiste 17 gewöhnlich bis zum durch den Einstellbolzen 30 definierten Anschlag nach unten und der Wagen 15 ruht nur auf derselben. Bei Beladung der Mulde 20 wird unter Kompression der Spiralfedern 33 das Fahrgestell 18 nach unten gedrückt, bis die Laufräder 16a,b auf den Laufflächen 5a,b aufliegen.

Ein im Fahrgestell 18 und im Träger 19 drehbar gelagerter und durch eine Bohrung in einer Arretierlasche 37 am Haltefortsatz 28 ragender Arretierbolzen 38 greift mit seiner mit einem Gewinde versehenen Endpartie in eine Gewindebohrung in einem rechteckigen Mitnehmerstück 39 ein. Durch Drehung des Arretierbolzens 38 kann das Mitnehmerstück 39, das durch den Haltefortsatz 28 blockiert ist und die Drehung nicht mitmachen kann, angehoben werden, sodass es schliesslich an die Arretierlasche 37 stösst und den Haltefortsatz 28 und die Mitnehmerleiste 17 anhebt. Auf diese Weise kann die Mitnehmerleiste 17 von der Doppelkette 12 abgehoben werden, sodass der Wagen 15 von Hand verschoben werden kann.

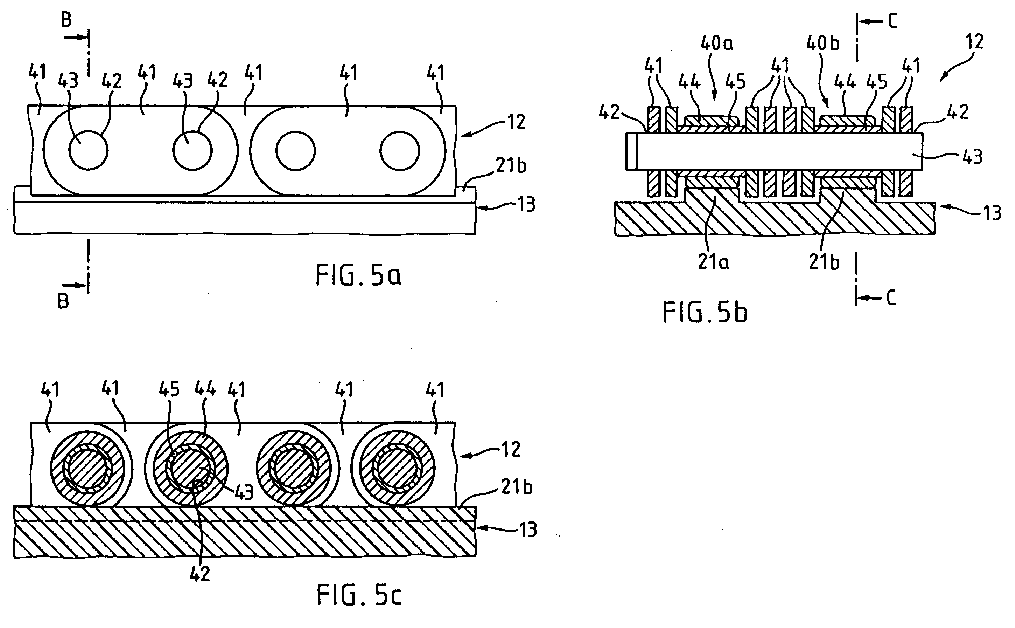

Der Aufbau der Doppelkette 12 und der Gleitschiene 13 sind am deutlichsten den Fig. 5a,b,c zu entnehmen. Die Doppelkette 12 besteht aus zwei unmittelbar nebeneinander angeordneten Ketten 40a,b, von denen jede beidseits eine Folge paarweise überlappender Laschen 41 aufweist. Jede der Laschen 41 weist zwei in Längsrichtung beabstandete Oeffnungen 42 auf, von denen die hintere jeweils mit der vorderen der nächsten Lasche 41 zur Deckung gebracht ist und von einem Stift 43 durchragt wird, welcher im vorliegenden Fall jeweils den nebeneinander angeordneten Ketten 40a,b der Doppelkette 12 gemeinsam ist und sie so zusammenhält.

Zwischen den Laschenfolgen jeder der Ketten 40a,b ist der Stift 43 jeweils von einer Hülse 44 umgeben, welche um denselben drehbar ist. Zwischen Stift 43 und Hülse 44 ist eine Zwischenhülse 45 eingefügt, welche die Beweglichkeit der Hülse 44 gegenüber dem Stift 43 erhöht.

Soll der Wagen 15 von einer bestimmten Stelle der Schienenanordnung 2 zu einer anderen bewegt werden, so geht ein entsprechender Befehl von einer zentralen Steuereinheit an den Elektromotor 9, welcher die Achse 7 antreibt und über das Antriebsrad 8 die Doppelkette 12 in Bewegung setzt. Da die Verbindung zwischen dem Elektromotor 9 und der Doppelkette 12 formschlüssig ist, kann die letztere durch entsprechende Steuerung des ersteren sehr genau positioniert werden. Auch die reibschlüssige Verbindung zwischen der Doppelkette 12 und der Mitnehmerleiste 17 ist exakt genug, um eine präzise Positionierung des Wagens 15 zu gewährleisten. Sie wird vor allem durch den Kontakt mit den Oberseiten der Laschen 41 hergestellt, der auch bei starkem Anpressdruck die Beweglichkeit der Doppelkette 12 nicht beeinträchtigt, da diese auf den Führungsstegen 21a,b der Gleitschiene 13 mit den drehbaren Hülsen 44 abrollt. Die ortsfeste Anordnung der Antriebseinheit ist dabei sowohl im Hinblick auf die Einfachheit des Aufbaus als auch auf die präzise Funktion und Zuverlässigkeit der Anlage wesentlich.

Der Uebergang von einer Antriebseinheit zu einer darauffolgenden ist problemlos, da der Abstand zwischen kontrollierten, von Gleitschienen 13 gestützten Doppelkettenabschnitten der Antriebseinheiten nur wenig grösser zu sein braucht als der Durchmesser des Antriebsrads 8, sodass selbst eine nicht sehr lange Mitnehmerleiste 17 am Uebergang auf beiden besagten Doppelkettenabschnitten satt aufliegt. So können nicht nur aufeinanderfolgende unabhängig steuerbare Schienenanordnungen 2, sondern durch Drehscheiben, welche jeweils eine kurze Schienenanordnung tragen, auch einander schneidende Schienenanordnungen ohne weiteres verbunden werden und zusammenwirken.

Die Förderanlage kann durch Geräte, die die Wagenpositionen überwachen, ergänzt werden, z. B. Lichtschranken.

## Patentansprüche

1. Förderanlage mit mindestens einer Schienenanordnung (2), welche mindestens zwei parallele Laufflächen (5a, 5b) aufweist sowie eine Antriebseinheit mit einem parallel zu den Laufflächen (5a, 5b) längs einer ortsfesten Gleitschiene (13) geführten Hüllglied, welches über mindestens ein antreibbares, ortsfestes Antriebsrad (8) läuft, sowie mit mindestens einem längs der Schienenanordnung (2) verschiebbaren Wagen (15) mit einem Fahrgestell (18) mit auf den Laufflächen (5a, 5b) rollenden Laufrädern (16a, 16b) und mit einem die Antriebseinheit kontaktierenden, vertikal verschiebbar und durch Federkraft gegen die von der Gleitschiene (13) abgewandte Seite des Hüllglieds gedrückt am Wagen (15) aufgehängten Mitnehmer, **dadurch gekennzeichnet, dass** das Hüllglied als Kette (12) ausgebildet ist und der Mitnehmer als in der Breite die Kette (12) vollständig überdeckende Mitnehmerleiste (17), deren Länge ihre Breite wesentlich überschreitet.

2. Förderanlage nach Anspruch 1, **dadurch gekennzeichnet, dass** die Kette (12) auf der Gleitschiene (13) abrollbar ist.

3. Förderanlage nach Anspruch 2, **dadurch gekennzeichnet, dass** die Kette (12) mindestens zwei parallele Folgen aufeinanderfolgender paarweise überlappender Laschen (41) umfasst, die durch Stifte (43) verbunden sind, welche von um sie drehbaren Hülsen (44) umgeben sind und dass die Gleitschiene (13) mindestens einen Führungssteg (21a, 21b) aufweist, welcher zwischen die Laschen (41) ragt und auf welchem die Hülsen (44) abrollen.

4. Förderanlage nach einem der Ansprüche 1 bis 3, **dadurch gekennzeichnet, dass** die Kette (12) als Doppelkette ausgebildet ist.

5. Förderanlage nach einem der Ansprüche 1 bis 4, **dadurch gekennzeichnet, dass** die Gleitschiene (13) aus abriebfestem Kunststoff besteht.

6. Förderanlage nach einem der Ansprüche 1 bis 5, **dadurch gekennzeichnet, dass** die Schienenanordnung (2) zwei nebeneinander angeordnete Laufflächen (5a, 5b) aufweist, zwischen denen die Kette (12) mittig geführt ist, und das Fahrgestell (18) mindestens zwei Paare von Laufrädern (16a, 16b), zwischen denen die Mitnehmerleiste (17) aufgehängt ist.

7. Förderanlage nach Anspruch 6, **dadurch gekennzeichnet, dass** jedes Laufrad (16a, 16b) um eine feststehende Nabe (24a; 24b) drehbar ist, welche ein um eine vertikale Achse drehbares, seitlich überstehendes Führungsrad (25a; 25b) trägt.

8. Förderanlage nach einem der Ansprüche 1 bis 7, **dadurch gekennzeichnet, dass** die Mitnehmerleiste (17) mindestens zwei Haltefortsätze (28) mit jeweils einem quer durchgehenden, vertikal gerichteten Langloch (29) aufweist, welche jeweils zwischen zwei quer zur Laufrichtung beabstandeten, am Fahrgestell (18) befestigten, durch einen das Langloch (29) durchdringenden Querbolzen (27) verbundenen Laschen (26a, 26b) liegen.

9. Förderanlage nach Anspruch 8, **dadurch gekennzeichnet, dass** sie zur Einstellung des Maximalabstandes der Mitnehmerleiste (17) vom Fahrgestell (18) mindestens zwei Einstellbolzen (30) aufweist, welche jeweils mit einer mit der Mitnehmerleiste (17) verbundenen Gewindebohrung im Eingriff stehen und gegenüber dem Fahrgestell (18) nach unten begrenzt verschieblich sind.

10. Förderanlage nach einem der Ansprüche 1 bis 9, **dadurch gekennzeichnet, dass** die Mitnehmerleiste (17) in einer Position arretierbar ist, in welcher sie mit der Kette (12) nicht in Kontakt ist.

## Claims

1. Conveying plant having at least one rail arrangement (2), which has at least two parallel running surfaces (5a, 5b) and also a drive unit having an enveloping member, which is guided in parallel with the running surfaces (5a, 5b) along a fixed sliding rail (13) and runs over at least one drivable, fixed driving wheel (8), and also having at least one vehicle (15), which can be moved along the rail arrangement (2) and has an undercarriage (18), which has running wheels (16a, 16b), which roll on the running surfaces (5a, 5b), and has a carrier suspended on the vehicle (15), which carrier is in contact with the drive unit, is vertically movable, and is pressed by spring force against the side of the enveloping member that faces away from the sliding rail (13), **characterised in that** the enveloping member is constructed as a chain (12) and the carrier is constructed as a carrier bar (17) which completely covers the width of the chain (12) and the length of which carrier bar substantially exceeds the width thereof.

2. Conveying plant according to claim 1, **characterised in that** the chain (12) can roll on the sliding rail (13).

3. Conveying plant according to claim 2, **characterised in that** the chain (12) comprises at least two parallel series of consecutive side bars (41) which overlap in pairs and are connected by pins (43) which are surrounded by sleeves (44) which are rotatable about said pins, and in that the sliding rail (13) has at least one guide web (21a, 21b), which projects between the side bars (41) and on which the sleeves (44) roll.

4. Conveying plant according to one of the claims 1 to 3, **characterised in that** the chain (12) is constructed as a double chain.

5. Conveying plant according to one of the claims 1 to 4, **characterised in that** the sliding rail (13) consists of non-abrasive plastics.

6. Conveying plant according to one of the claims 1 to 5, **characterised in that** the rail arrangement (2) has two running surfaces (5a, 5b) which are arranged next to each other and between which the chain (12) is guided centrally, and the undercarriage (18) has at least two pairs of running wheels (16a, 16b), between which the carrier bar (17) is suspended.

7. Conveying plant according to claim 6, **characterised in that** each running wheel (16a, 16b) is rotatable about a fixed hub (24a; 24b), which supports a guide wheel (25a; 25b) which is rotatable about a vertical axis and protrudes laterally.

8. Conveying plant according to one of the claims 1 to 7, **characterised in that** the carrier bar (17) has at least two holding extensions (28) having in each case a transversely continuous, vertically-directed elongated hole (29), which elongated holes lie in each case between two side bars (26a, 26b) which are distanced transversely with respect to the direction of movement and are fastened to the undercarriage (18) and are connected by a crossbolt (27) which penetrates the elongated hole (29).

9. Conveying plant according to claim 8, **characterised in that** in order to adjust the maximum distance of the carrier bar (17) from the undercarriage (18), said conveying plant has at least two adjustment bolts (30), which are in each case engaged with a threaded bore, which is connected to the carrier bar (17), and are movable with respect to the undercarriage (18) in a manner limited in the downwards direction.

10. Conveying plant according to one of the claims 1 to 9, **characterised in that** the carrier bar (17) can be arrested in a position in which it is not in contact with the chain (12).

## Revendications

1. Dispositif de transport avec au moins une disposition de glissières (2) qui présentent au moins deux bandes de roulement parallèles (5a, 5b) ainsi qu'une unité d'entraînement avec un élément enveloppant guidé parallèlement aux bandes de roulement (5a, 5b) le long d'une glissière fixe (13), élément qui roule sur au moins une roue d'entraînement (8) stationnaire pouvant être commandé, ainsi qu'avec au moins un chariot (15) mobile le long de la disposition des glissières (2), avec un châssis (18) ayant des galets de roulement (16a, 16b) roulant sur les bandes de roulement (5a, 5b) et avec un entraîneur suspendu sur le chariot (15) et qui est en contact avec l'unité d'entraînement, à mobilité verticale et poussé par effet élastique contre le côté opposé de la glissière (13) de l'élément enveloppant, **caractérisé en ce que** l'élément enveloppant est présenté sous forme de chaîne (12) et l'entraîneur sous forme de patin d'entraînement (17) dont la largeur recouvre totalement la chaîne (12), patin qui est nettement plus long que large.

2. Dispositif de transport selon la revendication 1, **caractérisé en ce que** la chaîne (12) peut se dérouler sur la glissière (13).

3. Dispositif de transport selon la revendication 2, **caractérisé en ce que** la chaîne (12) comporte au moins deux séries parallèles de paires de maillons (41) qui se chevauchent et qui sont reliés par des goupilles (43) entourées de douilles (44) mobiles, et en ce que la glissière (13) présente au moins une nervure de guidage (21a, 21b) qui dépasse entre les maillons (41) et sur laquelle roulent les douilles (44).

4. Dispositif de transport selon l'une des revendications 1 à 3, **caractérisé en ce que** la chaîne (12) est une chaîne duplex.

5. Dispositif de transport selon l'une des revendications 1 à 4, **caractérisé en ce que** la glissière (13) est en matériau synthétique résistant à l'usure.

6. Dispositif de transport selon l'une des revendications 1 à 5, **caractérisé en ce que** la disposition des glissières (2) présente deux bandes de roulement (5a, 5b) entre lesquelles la chaîne (12) est centrée et en ce que le châssis (18) présente au moins deux paires de galets de roulement (16a, 16b) entre lesquelles est suspendu le patin d'entraînement (17).

7. Dispositif de transport selon la revendication 6, **caractérisé en ce que** chaque galet de roulement (16a, 16b) tourne autour d'un moyeu fixe (24a, 24b) qui supporte un galet de guidage (25a, 25b) mobile selon un axe vertical et qui dépasse sur le côté.

8. Dispositif de transport selon l'une des revendications 1 à 7, **caractérisé en ce que** le patin d'entraînement (17) présente au moins deux prolongements supports (28) présentant chacun un trou oblong (29) vertical transversal, prolongements supports qui se situent chacun entre deux éclisses (26a, 26b) fixées sur le châssis (18) de façon transversale dans le sens de la marche et reliées par un axe transversal (27) qui passe dans le trou oblong (29).

9. Dispositif de transport selon la revendication 8, **caractérisé en ce qu**'il présente pour le réglage de la distance maximale entre le patin d'entraînement (17) et le châssis (18) au moins deux vis de réglage (30) qui agissent chacun sur un faraudage relié au patin d'entraînement (17) et qui peuvent être déplacés par rapport au châssis (18) de façon limitée vers le bas.

10. Dispositif de transport selon l'une des revendications 1 à 9, **caractérisé en ce que** le patin d'entraînement (17) peut être arrêtée dans une position dans laquelle elle n'est pas en contact avec la chaîne (12).
